# DEMANDE DE BREVET EUROPEEN

(11) **EP 1 030 308 A1**
(43) Date de publication de la demande: **23.08.2000**
(21) Numéro de dépôt: 00490008.0
(22) Date de dépôt: 17.02.2000
(51) Int. Cl.: G11B 33/04

(54) **Dispositif de protection de supports d'informations et/ou de données et pour accueillir des objets en forme de disque**

(30) Priorité: 19.02.1999 FR 9902254
(71) Demandeur: Achat et Distribution d'Articles de Classement, "A D Classement", S.A., 59300 Valenciennes (FR)
(72) Inventeur: Dottel, Jean-Marc, 59300 Valenciennes (FR)
(74) Mandataire: Duthoit, Michel

(57) **Abrégé**

L'invention concerne un dispositif de protection de supports d'informations et/ou de données, constitué d'une poche souple (1) présentant au moins deux faces (2, 3) opposées, localement solidarisées l'une à l'autre, et prévu apte à accueillir des objets (4) en forme de disques, notamment cédéroms ou autres supports de données numériques, de diamètre D, ladite poche (1) étant prévue sensiblement rectangulaire de longueur inférieure à 3D, ou à un multiple de 3D, et de largeur inférieure à 2D, ou à un multiple de 2D, ledit dispositif comprenant des moyens (5) de séparation de ladite poche (1) en trois logements (6a, 6b, 6c), ou un multiple de trois logements distincts, pour accueillir lesdits objets (4) selon des emplacements en quinconce.

## Description

L'invention concerne un dispositif de protection de supports d'informations et/ou de données pour accueillir des objets en forme de disque, notamment cédérom, ou autres supports de données numériques.

Toutefois, bien que plus particulièrement prévue pour de telles applications, elle pourra être utilisée, de manière générale, avec tous types de disques.

Actuellement, on connaît des dispositifs de protection de supports d'informations et/ou de données constitués de poches souples subdivisées en six compartiments de même taille et réparties en deux colonnes de trois compartiments prévus symétriquement de part et d'autre de l'axe longitudinal de ladite pochette, pour accueillir des disquettes informatiques au format appelé 3 pouces ½.

Bien que satisfaisantes pour de telles applications, ces pochettes ne conviennent toutefois pas pour ranger des cédéroms, ceux-ci étant trop grands pour les logements en question.

En fait, si l'on souhaite ranger des objets en forme de disque au format des cédéroms, c'est-à-dire d'environ 11,9 cm de diamètre, dans une pochette souple au format A4, c'est-à-dire de 21 x 29,7 cm, on s'aperçoit que les dimensions respectives de la pochette et des disques ne facilitent pas leur mise en place dans des logements distincts.

Le but de la présente invention est de proposer un dispositif de protection de supports d'informations et/ou de données qui pallie les inconvénients précités et permet de ranger un nombre maximum d'objets en forme de disques, notamment cédéroms ou autres supports de données numériques, en des emplacements distincts dans une pochette souple.

Un autre but de la présente invention est de proposer un dispositif de protection de supports d'informations et/ou de données qui permet d'assurer le maintien des objets en forme de disques, notamment cédéroms ou autres supports de données numériques, rangés.

Un autre but de la présente invention est de proposer un dispositif de protection de supports d'informations et/ou de données qui facilite l'introduction / extraction des objets en forme de disques, notamment cédéroms ou autres supports de données numériques, que l'on souhaite ranger.

Un autre but de la présente invention est de proposer un dispositif de protection de supports d'informations et/ou de données qui facilite la préhension des objets en forme de disques, notamment cédéroms ou autres supports de données numériques, rangés dans ledit dispositif.

Un autre but de la présente invention est de proposer un dispositif de protection de supports d'informations et/ou de données dont la fabrication soit simplifiée et dont la solidité soit préservée.

D'autres buts et avantages de l'invention apparaîtront au cours de la description qui va suivre qui n'est donnée qu'à titre indicatif et qui n'a pas pour but de la limiter.

L'invention concerne un dispositif de protection de supports d'informations et/ou de données, constitué d'une poche souple présentant au moins deux faces opposées, localement solidarisées l'une à l'autre, et prévues aptes à accueillir des objets en forme de disque, notamment cédéroms ou autres supports de données numériques, de diamètre D, ladite poche étant prévue sensiblement rectangulaire de longueur inférieure à 3D ou à un multiple de 3D, et de largeur inférieure à 2D, ou à un multiple de 2D, ledit dispositif comprenant des moyens de séparation de ladite poche en trois logements, ou un multiple de trois logements distincts, pour accueillir lesdits objets selon des emplacements en quinconce.

L'invention concerne également un dispositif tel que décrit plus haut, accueillant, dans l'un au moins de sesdits logements, undit objet.

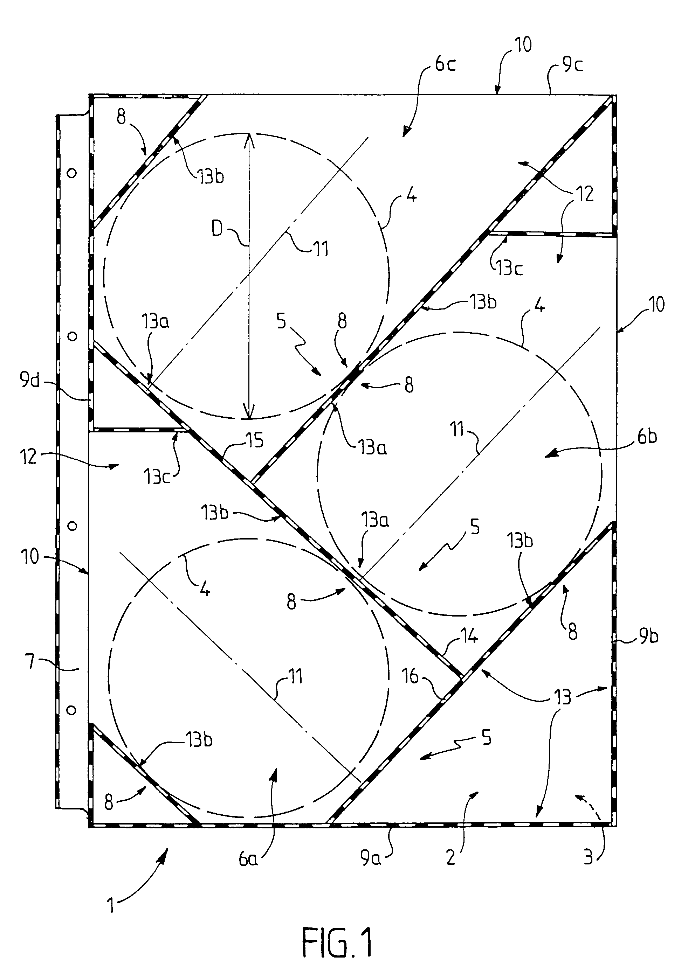

L'invention sera mieux comprise à la lecture de la description suivante accompagnée des dessins en annexe qui en font partie intégrante et qui illustre, à la figure 1, un exemple de réalisation du dispositif de protection de supports d'informations et/ou de données conforme à l'invention.

L'invention concerne un dispositif de protection de supports d'informations et/ou de données destiné à accueillir des objets en forme de disques, notamment cédéroms ou autres supports de données numériques.

Toutefois, bien que plus particulièrement prévue pour de telles applications, elle pourra être utilisée, de manière générale, avec tous types de disques.

Comme illustrée à la figure 1, l'invention concerne un dispositif de protection de supports d'informations et/ou de données, constitué d'une poche souple 1, présentant au moins deux faces 2, 3 opposées, localement solidarisées l'une à l'autre. Ladite poche 1 est de forme sensiblement rectangulaire.

Alors que celle-ci présente une longueur inférieure à 3D, ou à un multiple de 3D, et une largeur inférieure à 2D ou à un multiple de 2D, on souhaite pouvoir accueillir dans ledit dispositif de protection de supports d'informations et/ou de données des objets 4 en forme de disque de diamètre D. Il s'agit, par exemple, d'une poche souple au format A4 (21 x 29,7 cm) à l'intérieur de laquelle on souhaite ranger des cédéroms d'environ 11, 9 cm de diamètre.

Pour cela, ledit dispositif comprend des moyens 5 de séparation de ladite poche 1 en trois logements 6a, 6b, 6c, ou un multiple de trois logements distincts, pour accueillir lesdits objets 4 selon des emplacements en quinconce. On peut ainsi optimiser le rangement desdits objets 4.

Ladite poche 1 est constituée, notamment, de matériau plastique ou similaire, présentant éventuellement une certaine élasticité. L'une et/ou l'autre de ses faces 2, 3 sont, par exemple, prévues transparentes.

Afin de permettre son classement, la poche 1 pourra être, notamment, prolongée latéralement au niveau de l'une de ses arêtes longitudinales par une bande de reliure 7, éventuellement perforée.

Cela étant, lesdits moyens de séparation 5 sont prévus aptes en outre, par exemple, à maintenir en place lesdits objets 4 en deux points opposés 8 de leur circonférence et/ou à guider lesdits objets 4 dans leurs dits logements 6a, 6b, 6c.

Tout en conservant une poche 1 de constitution et de fabrication relativement simples, on peut ainsi faciliter le blocage des objets rangés ainsi que leur extraction / introduction dans leur logement.

L'ensemble desdits logements 6a, 6b, 6c présente une ouverture 10 constituée, notamment, par tout ou partie d'une des arêtes 9a, 9b, 9c, de ladite poche 1 dont lesdites au moins deux faces 2, 3 au niveau desdites ouvertures 10 sont prévues non solidaires.

On facilite ainsi la fabrication de ladite poche 1 qu'il n'est pas nécessaire de reprendre pour réaliser des découpes en vue de constituer les ouvertures des logements.

Sauf au niveau desdites ouvertures 10, lesdites au moins deux faces 2, 3 pourront être prévues solidaires, par exemple, sur l'ensemble du pourtour de ladite poche 1. Celles-ci présentent alors une meilleure rigidité et ses arêtes sont moins fragiles.

Dans le cas d'une poche 1 à trois logements 6a, 6b, 6c, les ouvertures 10 de chacun desdits logements sont prévues, notamment, au niveau de trois arêtes différentes de la poche 1.

Lesdits logements 6a, 6b, 6c présentent entre leur fond et leur ouverture respectifs un axe longitudinal 11, par exemple incliné par rapport aux arêtes 9a, 9b, 9c, 9d de la poche 1.

L'ensemble desdits logements 6a, 6b, 6c est alors éventuellement orienté dans le même sens pour que chacun permette de diriger lesdits objets 4 vers le fond ou vers l'ouverture de leurs logements respectifs, sous leur propre poids, quand la poche 1 est maintenue verticalement.

On favorise ainsi le maintien en place des objets 4 dans leur logement et l'on évite qu'ils risquent d'en sortir lors de simples déplacements de la poche 1, par exemple en cas de manipulations d'un classeur dans lequel elle serait rangée.

Un autre avantage de l'orientation inclinée des logements 6a, 6b, 6c peut également être vu dans le fait qu'elle permet de libérer, au voisinage des ouvertures 10, une zone 12 au niveau de laquelle l'utilisateur pourra facilement insérer son pouce et son index pour saisir les objets 4 rangés.

L'inclinaison du ou desdits axes longitudinaux 11 varie, par exemple, de 35 ° à 55 ° par rapport aux arêtes de la poche 1. Elle est, notamment, plus précisément d'environ 45 °.

Lesdits moyens de séparation 5 sont constitués, par exemple de zones de liaison entre lesdites faces 2, 3 de la poche 1 prévue sous forme de lignes 13, dites lignes de liaison.

Lesdites lignes de liaison 13 sont réalisées, notamment, par soudure, par exemple ponctuelle, des deux faces 2, 3.

Tout ou partie desdits logements 6a, 6b, 6c sont séparés, au moins localement, par unedite ligne de liaison, éventuellement commune 13a.

Tout ou partie desdits logements présentent, notamment au moins deuxdites lignes de liaison desdites faces 13b, sensiblement parallèles entre elles et sensiblement espacées d'une distance D de façon à bloquer lesdits objets dans leur logement.

Lesdites lignes de liaison 13b servant au blocage sont, éventuellement, de faible longueur. Il suffit en effet qu'elles permettent un contact ponctuel de manière tangente avec l'objet 4 rangé dans le logement correspondant.

Selon un autre mode de réalisation, lesdites deux lignes de liaison 13b permettant un blocage des objets sont prévues, par exemple, prolongées en direction de l'ouverture 10 des logements de façon à permettre un guidage desdits objets.

En prévoyant un espacement d'une dimension D entre lesdites lignes de liaison 13b servant au blocage, on joue ainsi sur la souplesse de la poche, éventuellement son élasticité, pour maintenir les objets 4 en fonction de leur épaisseur par coopération avec les lignes de liaison 13.

Une partie au moins desdites lignes de liaison 13b permettant un blocage des objets 4 pourra éventuellement définir également une partie au moins d'unedite ligne de liaison 13a pour la séparation commune d'undit logement d'un autre des logements, ceci pour tout ou partie des logements.

Ces derniers peuvent en outre présenter une ou desdites lignes de liaison 13c desdites faces 2, 3 pour compléter le guidage des objets, prévus sensiblement perpendiculairement à l'une des arêtes de ladite poche 1, au niveau de l'une des extrémités de l'ouverture 10 correspondante.

Selon le mode de réalisation illustré, ledit dispositif comprend troisdits logements :
- un premier logement 6a destiné à permettre la mise en place d'undit objet 4, en fond de logement, de façon tangentielle à l'une des arêtes transversales 9a, dite première, de ladite poche 1, l'ouverture 10 dudit premier logement 6a étant prévue sur l'une des arêtes orthogonales 9d, dite seconde, à ladite première arête 9a,
- un second logement 6b, dont l'axe longitudinal est orthogonal à celui dudit premier logement 6a et dont l'ouverture 10 est prévue au niveau de l'arête 9b, dite troisième, parallèle à ladite seconde arête 9d,
- un troisième logement 6c, dont l'axe longitudinal est parallèle à celui dudit second logement 6b et dont l'ouverture 10 est prévue au niveau de la quatrième arête 9c de la poche 1.

Lesdits logements 6a, 6b, 6c sont, selon cet exemple, orientés d'environ 45 ° par rapport à l'arête de la poche 1 au niveau de laquelle ils débouchent.

En outre, lesdits premier, second et troisième logements présentent deux dites lignes de liaison permettant un blocage 13b dudit objet, prolongé jusqu'à leur ouverture, unedite ligne de liaison permettant le blocage dudit premier logement 6a définissant au moins partiellement le fond 14, 15 desdits second et troisième logements 6b, 6c et l'une desdites lignes de liaison 13b permettant le blocage dudit second logement 6b définissant l'une desdites lignes de liaison 13b permettant le blocage dudit troisième logement 6c, et donc leur séparation.

Lesdites lignes de liaison 13 remplissant un double rôle de séparation ou de blocage des objets 4 sont destinées dans cet exemple notamment, à définir des médiatrices pour les objets 4, une fois ceux-ci en place. Il s'agit des lignes de liaison formant séparation entre, d'une part, le premier logement 6a et le second logement 6b et, d'autre part, le second logement 6b et le troisième logement 6c.

Pour le second logement 6b, la ligne de liaison 13b servant uniquement au blocage est prolongée, éventuellement, en direction de ladite première arête 9a pour définir un fond 16 pour ledit premier logement 6a.

Unedite ligne de liaison 13c pour compléter le guidage est prévue, notamment, au niveau desdits premier et second logements 6a, 6b.

Selon le mode de réalisation illustré, on constate qu'aucune ouverture n'est prévue au niveau des coins de la poche 1, ce qui contribue à renforcer sa résistance.

Naturellement, d'autres modes de réalisation, à la portée de l'homme de l'art, auraient pu être envisagés sans pour autant sortir du cadre de l'invention.

## Revendications

1. Dispositif de protection de supports d'informations et/ou de données, constitué d'une poche souple (1) présentant au moins deux faces (2, 3) opposées, localement solidarisées l'une à l'autre, et prévues aptes à accueillir des objets (4) en forme de disque, notamment cédéroms ou autres supports de données numériques, de diamètre D, ladite poche étant prévue sensiblement rectangulaire de longueur inférieure à 3D ou à un multiple de 3D, et de largeur inférieure à 2D ou à un multiple de 2D, ledit dispositif comprenant des moyens (5) de séparation de ladite poche (1) en trois logements (6a, 6b, 6c), ou un multiple de trois logements distincts, pour accueillir lesdits objets (4) selon des emplacements en quinconce.

2. Dispositif selon la revendication 1, dans lequel lesdits moyens de séparation (5) sont prévus aptes en outre à maintenir en place lesdits objets (4) en deux points opposés (8) de leur circonférence et/ou à guider lesdits objets (4) dans leurs dits logements (6a, 6b, 6c).

3. Dispositif selon la revendication 1, dans lequel l'ensemble desdits logements présente une ouverture (10) constituée par tout ou partie d'une arête (9a, 9b, 9c, 9d) de ladite poche dont lesdites au moins deux faces (2, 3) au niveau desdites ouvertures (10), sont prévues non solidaires.

4. Dispositif selon la revendication 1, dans lequel lesdits logements (6a, 6b, 6c) présentent entre leur fond et leur ouverture respectifs un axe longitudinal (11) incliné par rapport aux arêtes (9a, 9b, 9c, 9d) de ladite poche (1), l'ensemble desdits logements (6a, 6b, 6c) étant orienté dans le même sens pour permettre de diriger lesdits objets (4) vers le fond ou vers l'ouverture de leur logement respectif, sous leur propre poids.

5. Dispositif selon la revendication 1, dans lequel lesdits moyens (5) de séparation sont constitués de zones de liaison entre lesdites faces (2, 3) de la poche (1), prévues sous forme de lignes dites lignes de liaison (13).

6. Dispositif selon la revendication 5, dans lequel tout ou partie desdits logements (6a, 6b, 6c) sont séparés, au moins localement, par unedite ligne de liaison commune (13a).

7. Dispositif selon la revendication 6, dans lequel tout ou partie desdits logements (6a, 6b, 6c) présentent au moins deuxdites lignes de liaison (13b) desdites faces (2, 3), sensiblement parallèles entre elles et sensiblement espacées d'une distance D de façon à bloquer lesdits objets (4) dans leur logement, une partie au moins des lignes de liaison (13b) permettant un blocage des objets (4) définissant également une partie au moins d'unedite ligne de liaison (13a) pour la séparation commune d'undit logement d'un autre desdits logements.

8. Dispositif selon la revendication 7, dans lequel lesdites deux lignes de liaison (13b) permettant un blocage des objets sont prévues prolongées en direction de l'ouverture des logements (6a, 6b, 6c) de façon à permettre un guidage desdits objets.

9. Dispositif selon la revendication 8, comprenant trois dits logements :
- un premier logement (6a) destiné à permettre la mise en place d'undit objet (4), en fond de logement, de façon tangentielle à l'une des arêtes transversales (9a), dite première, de ladite poche (1), l'ouverture (10) dudit premier logement (6a) étant prévue sur l'une des arêtes orthogonales (9d), dite seconde, à ladite première arête (9a),
- un second logement (6b), dont l'axe longitudinal (11) est orthogonal à celui dudit premier logement (6a) et dont l'ouverture (10) est prévue au niveau de l'arête (9b) de la poche (1), dite troisième, parallèle à ladite seconde arête (9d),
- un troisième logement (6c), dont l'axe longitudinal (11) est parallèle à celui dudit second logement (6b) et dont l'ouverture (10) est prévue au niveau de la quatrième arête (9c) de la poche (1),
- lesdits premier, second et troisième logements (6a, 6b, 6c) présentant deuxdites lignes de liaison (13b) permettant un blocage dudit objet (4), prolongé jusqu'à leur ouverture,
- une desdites lignes de liaison (13b) permettant le blocage dudit premier logement (6a) définissant au moins partiellement le fond (14, 15) desdits second et troisième logements (6b, 6c),
- une desdites lignes de liaison (13b) permettant le blocage dudit second logement (6b) définissant une desdites lignes de liaison (13b) permettant le blocage dudit troisième logement (6c).

10. Dispositif selon l'une quelconque des revendications précédentes accueillant, dans l'un au moins de sesdits logements (6a, 6b, 6c) undit objet (4).
